# EUROPEAN PATENT APPLICATION

(11) **EP 1 431 804 A2**
(43) Date of publication of application: **23.06.2004**
(21) Application number: 03027987.1
(22) Date of filing: 05.12.2003
(51) Int. Cl.: G03B 13/02

(54) **Image finder for self-portrait photography**

(30) Priority: 19.12.2002 GB 0229705
(71) Applicant: Nokia Corporation, 02150 Espoo (FI)
(72) Inventor: Chauhan, Tejal, Edgware Middlesex HA8 5NH (GB)
(74) Representative: Higgin, Paul

(57) **Abstract**

One or more mirrors (121) surround a camera lens window (122) in a portable camera or particularly in a mobile camera telephone (100). When taking a self-portrait, a user can confirm the correct alignment of the self-portrait if he or she can see parts of his or her head in the mirror image surrounding a hole therein caused by lens window (122).

## Description

This invention relates to image finding. It relates particularly, but not exclusively, to finding an image by a digital camera.

Digital cameras have recently become very popular and more recently some modern mobile telecommunication devices also include a digital camera unit using which one can take and send still and/or video images. Particularly with the digital cameras integrated with mobile telephones, it is desirable to easily take self-portraits. If the camera unit and a display showing the camera image reside on a common side of a digital camera, it is easy to take a self-portrait since the display shows current image and the user may snap a picture when he or she is happy with the image alignment. Typically, however, the display in mobile telephones is on another side than the camera lens so that another display needs to be included to provide easy and successful self-portraits. Of course, digital imaging allows also taking numerous snaps and choosing one out of many and erasing all those images not needed, but this is may prove onerous at least to some users.

As an alternative to providing another display, a camera may be provided with a mirror attached near the lens. Hence, a user may easily direct correctly the camera to capture desired image, for example so that the mirror reflects his or her head and shoulders. This results in inexpensive and rather successful digital imaging. The mirror fixed to the camera yet occupies its own size of surface area on the surface of the camera.

According to a first aspect of the invention there is provided a front element for an image capturing device for taking self-portraits, comprising:
a body;
a window formed in the body for passing light to an image capturing unit; and
a mirror arrangement surrounding the window adapted to reflect a mirror image to allow locating of an image for capture by the image capturing unit.

The mirror arrangement around the window allows efficient space usage as the window does not prevent a user from correctly aligning the image capturing device. A user would know that if, for example, his or her ears can be seen on either side of the window, the head will reside in the centre of an image even without the nose appearing in the mirror image. The invention makes use of the finding that a human can easily compensate missing parts of an image as long as some anchor points such as eyes, ears or hair can be found. The missing parts are towards the centre of the image to be captured.

There is no need for the mirror arrangement to span the entire diameter of the reflective area. This is particularly advantageous as it provides a great degree of freedom in designing the device that carries a front element of the first aspect of the invention. The human visual system can easily compensate for the missing region in the mirror image because the area of an object grows with the second power of its radius or simply because the centre forms a small proportion of the mirror image.

The mirror arrangement can be combined to a camera unit assembly so as to save costs and time in manufacture.

A relatively small reflective area suffices thus saving in material costs and facilitating maintenance by reducing the areas that easily show fingerprints. Further, relatively large space is left for possible exposure and auto-focus sensors, flash, hand-grip areas and product information, labels and instructions, for instance.

The mirror arrangement may consist of a plurality of mirror elements circling the window or single a mirror element surrounding the window. A single mirror element (e.g. ring shape) results in a strong and easy to manufacture piece that can be used to mask the aperture needed for a camera lens in an imaging device.

The a mirror elements may contain a product marking configured to become substantially non-perceivable in the mirror image when taking a self-portrait. Such product markings provide further dual use on the same area and allow an elegant, space consuming and manufacture friendly platform for providing additional information to the user, such as product name, lens information or patenting information necessitated by some jurisdictions for claiming retrospective damages.

The front element may comprise custom-tailored information in the one or more reflective elements. Users may thus personalise their front elements to their own liking, for example to contain personal words or symbols important for them, such as wedding dates, hearts and the name of music idols. Such customisation also provides a good business opportunity as people may wish to change the front element in order to re-personalise their front elements.

The front element may comprise a snap-on fixing means for quick attaching to an image-capturing device. This allows accessory sales wherein the users themselves can fix the front element in place. This further allows addition of the functionality provided by the invention and also easy change of personalised front elements.

The mirror arrangement may have been configured to indicate the extent of an imaging area of the image capturing unit. The mirror arrangement may comprise a substantially convex reflective surface to indicate the extent of the imaging area. It is easy to locate oneself for a self-portrait and also to design the layout of an image as the extent of the image can be perceived from the mirror image provided by the mirror arrangement. Further, a convex surface facilitates the cleaning the front element and designing it to appear as an integral part of its surrounding shape.

When viewed from the front, the substantially convex reflective surface may provide a reflection of an area substantially from a similar angle as what would be captured by an imaging unit. A user may then at least to an extent design the framing of his or her self-portraits.

According to a second aspect of the invention there is provided an image-capturing device, comprising:
an image capturing unit;
a window for passing light to the image capturing unit; and
a mirror arrangement surrounding the window adapted to reflect a mirror image to allow locating of an image for capture by the image capturing unit.

According to a third aspect of the invention there is provided a method of manufacturing an image capturing device, comprising the steps of:
attaching a front element to the image capturing device such that a window is formed for passing light to an image capturing unit; and
surrounding the window by a mirror arrangement adapted to reflect a mirror image to allow locating of an image for capture by the image capturing unit.

It should be appreciated that the embodiments of the first aspect may produce corresponding advantages when combined with different other aspects as well and that they can be combined where applicable, even though not all embodiments are expressly written after all aspects.

The invention will now be described, by way of example only, with reference to the accompanying drawings, in which:
- Fig. 1: shows a side view of a mobile camera phone according to a preferred embodiment of the invention;
- Fig. 2: shows a rear view of the mobile camera phone of Fig. 1;
- Fig. 3: shows a lens cap of Fig. 1 in more detail;
- Fig. 4: shows a cross section of the lens cap of Fig. 3 along line A-A'; and
- Fig. 5: shows an alternative lens cap for the camera unit of Fig. 3.

In the following, the invention will be exemplified by describing a preferred embodiment and few optional improvements that can be applied thereto. The examples concern a mobile camera telephone but it should be born in mind that the invention can be used in a variety of different imaging devices including digital or analogue cameras and video cameras. Corresponding reference signs have been applied to corresponding parts.

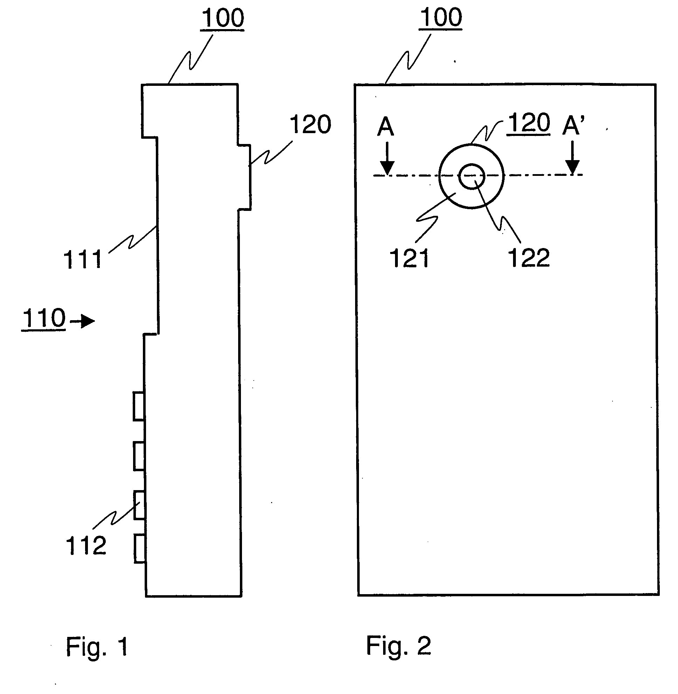

Fig. 1 shows a side view of a mobile camera phone 100 according to a preferred embodiment of the invention. The mobile camera phone 100 has a user interface 110 on one side and a camera unit 120 on a basically opposite side. The user interface 110 comprises a display 111 and keys 112. The camera phone 100 comprises electronics that allows it present on the display 111 images captured by the camera unit 120. The display 111 may also function as a viewfinder in case a user wishes to take a picture of other people, for example.

Fig. 2 shows a rear view of the mobile camera phone 100. The camera unit 120 is covered by an optically reflective or mirroring lens cap 121 that provides a camera window 122 for image capturing. The window 122 is typically provided by the lens cap defining an aperture. Alternatively, the window may be formed of a sufficiently transparent material so as to protect imaging circuitry inside the camera unit 120.

Fig. 2 further illustrates that only a small fraction of the rear surface will be required for the camera window and the mirror when the mirror is formed around the window.

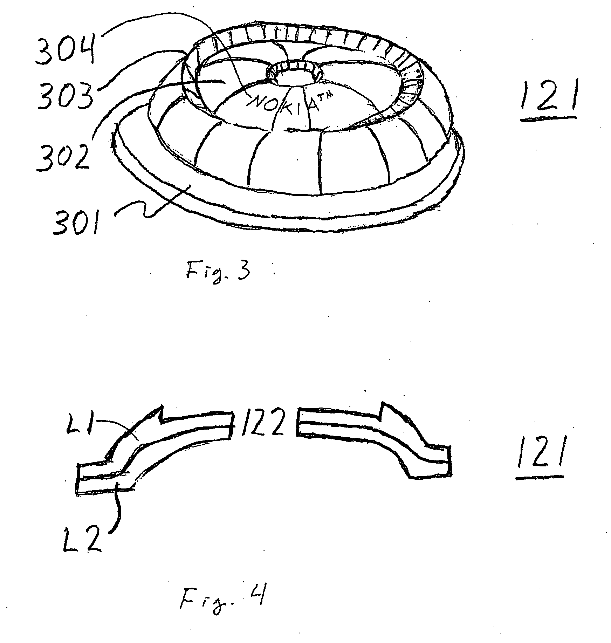

Fig. 3 shows the lens cap 121 in more detail. The lens cap has a shape resembling that of a reversed soup plate. The lens cap comprises a rim 301 surrounding a ridge portion 302 that further surrounds a reflector portion 303. The reflector portion 303 defines the window 122 in the centre of the reflector portion 303. The reflector portion 303 has been configured reflective for at least part of its surface area and has label texts 304. The label texts 304 are provided with line width fine enough to be neglected by the human eye when the eye is focused behind the focal plane at which they appear, that is when the lens cap is used as a mirror. These label texts are advantageously arranged on the sides and / or lower side of the window (considering the normal use orientation of the mobile camera phone 100) so that there will be minimum subjective disturbance for the user finding his or her eyes in the mirror image. The eyes provide an easy anchor point to locate oneself in the mirror image and thus it is beneficial to allow their easy finding in the mirror image.

The ridge portion 302 protrudes so that it shelters the reflector portion in case the camera unit 120 is placed against another object such as a desk. This reduces the exposure of the reflector portion 303 for abrasion.

In the preferred embodiment, the diameter of the window 122 is selected in the range of 2 to 10 mm, typically 6 mm and the diameter of the entire lens cap is between 15 and 30 mm, typically 20 mm. The inventor has found out that only a few millimetres wide mirror surrounding the window 122 suffices to find oneself in the mirror image when the mobile camera phone 100 is held in a typical reading distance, which the users generally tend to select. The label texts 304 provide an elegant way to provide a trademark or other information and simultaneously guide the user to locate the mobile camera phone 100 at an appropriate distance for a self portrait. Further, when the texts are provided with narrow lines, such as 0,5 or 0,3 mm, they largely disappear from sight when the user focuses to his own mirror image that is at twice the distance to the texts.

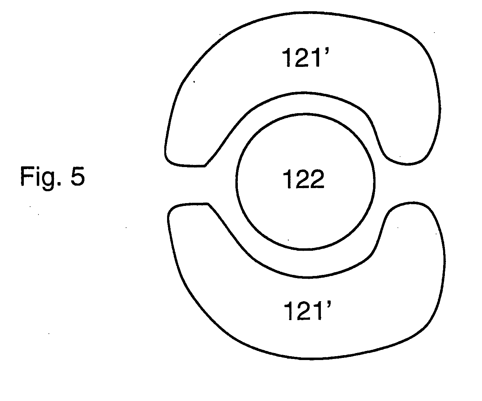

Fig. 4 shows a cross section of the lens cap 121. Fig. 4 illustrates that the reflective portion 303 is advantageously convex so that it is easier to locate oneself for a self-portrait. Fig. 4 further illustrates the two layers of the lens cap. In the outermost layer, towards a self-portraying user, there is an abrasion resistive clear layer L1. Layer L1 is typically around 0,5 to 2 mm thick. On the inner surface of the layer L1, a reflective chromium layer L2 is produced. The layer is advantageously reproduced using a template plate or drum, which readily produces the texts 304 as voids in the reflective substance.

Fig. 4 also shows that the shape of the lens cap 121 allows quick fixing to the mobile camera phone 100. Alternative or additional to a shape locking based fixture to the mobile camera phone 100, the lens cap 121 may contain clutches, thread or other fixing elements for easy fixing to the mobile camera phone 100, or it may be glued or ultrasound welded in place, for example. A relatively stiff structure can be obtained by permanently fixing the lens cap 121 to the mobile camera phone. On the other hand, a user replaceable lens cap 121 can be replaced to another lens cap 121 so as to allow a high degree of user customisation wherein a user may purchase a cap personalised with the user's own name or graphics provided by the user, for instance.

It may be beneficial to further include a support layer beneath the reflective layer L2 to stiffen the lens cap.

The shape of the reflective layer L2 is advantageously chosen so that it reflects, when looked at straight ahead, an image roughly corresponding that which would be captured by the camera unit 120. This allows the user to design to an extent the portrait he or she is going to take and / or user fitting of different filters incorporated to the lens cap in case that the window 122 has been formed of a transparent material rather than void in the lens cap 121.

Fig. 5 shows an alternative lens cap 121' for the camera unit of Fig. 3. The alternative lens cap 121' may be substantially similar to the lens cap 121 only differing in that the reflective layer L2 is provided in form of two or more areas around the camera window 122. In this way, further freedom for design is provided and more artistic looks can be achieved with little or none adverse effect on the portrait image finding use.

Particular implementations and embodiments of the invention have been described. It is clear to a person skilled in the art that the invention is not restricted to details of the embodiments presented above, but that it can be implemented in other embodiments using equivalent means without deviating from the characteristics of the invention. The present invention includes any novel feature or combination of features disclosed herein either explicitly or any generalisation thereof irrespective of whether or not it relates to the claimed invention or mitigates any or all of the problems addressed.

## Claims

1. A front element for an image capturing device for taking self-portraits, comprising:
a body;
a window formed in the body for passing light to an image capturing unit; and
a mirror arrangement surrounding the window adapted to reflect a mirror image to allow locating of an image for capture by the image capturing unit.

2. A front element according to claim 1, wherein the mirror arrangement comprises one or more mirror element.

3. A front element according to claim 1 or 2, wherein the mirror arrangement comprises of a continuous reflective surface completely surrounding the window.

4. A front element according to claim 2, wherein the one or more mirror elements contain a product marking configured to become substantially non-perceivable in the mirror image when taking a self-portrait.

5. A front element according to claim 2, wherein the front element comprises custom-tailored information in the one or more mirror elements.

6. A front element according to any of the preceding claims, wherein the front element comprises a snap-on fixing means for quick attaching to an image-capturing device.

7. A front element according to any of the preceding claims, wherein the front element comprises means for permanent fixing to an image-capturing device.

8. A front element according to any of the preceding claims, wherein the mirror arrangement has been configured to indicate the extent of an imaging area of the image capturing unit.

9. An image-capturing device, comprising:
an image capturing unit;
a window for passing light to the image capturing unit; and
a mirror arrangement surrounding the window adapted to reflect a mirror image to allow locating of an image for capture by the image capturing unit.

10. A method of manufacturing an image capturing device, comprising the steps of:
attaching a front element to the image capturing device such that a window is formed for passing light to an image capturing unit; and
surrounding the window by a mirror arrangement adapted to reflect a mirror image to allow locating of an image for capture by the image capturing unit.

11. A portable radio communication device having a front element as defined in claim 1.
